# EUROPÄISCHE PATENTSCHRIFT

(11) **EP 3 287 277 B1**
(45) Veröffentlichungstag und Bekanntmachung des Hinweises auf die Patenterteilung: **15.04.2020**
(21) Anmeldenummer: 17185333.6
(22) Anmeldetag: 18.12.2015
(51) Int. Cl.: B32B 7/12, B32B 29/00, B32B 3/30, B44C 1/24, B32B 37/10, B32B 29/08, B44C 5/04

(54) **SCHICHTSTOFFPLATTE**
LAMINATED MATERIAL
STRATIFIÉ

(43) Veröffentlichungstag der Anmeldung: 28.02.2018
(62) Teilanmeldung aus: 15201285.2
(73) Patentinhaber: SWISS KRONO Tec AG, 6004 Luzern (CH)
(72) Erfinder: BRAUN, Roger, 6130 Willisau (CH); STEINMANN, Pius, 6122 Menznau (CH); MOISCH, Dorin, 6014 Littau (CH)
(74) Vertreter: Kalkoff & Partner Patentanwälte PartmbB

(56) Entgegenhaltungen:
- WO-A1-2014/154297
- DE-A1- 10 316 695
- DE-A1- 19 942 972
- DE-A1-102013 021 195

## Beschreibung

Die Erfindung betrifft einen Schichtstoff.

Die Herstellung von Schichtstoff wird in der DE 32 08 728 A1, der WO 2014/154297 A1 und der DE 199 42 972 A1 beschrieben. Papierbahnen werden mit Kunstharz versehen, meist in flüssigem Kunstharz getränkt. Zwei oder mehr Papierbahnen werden übereinander gelegt und unter Einwirkung von erhöhtem Druck und erhöhter Temperatur gepresst, bis das Kunstharz ausgehärtet ist. Das Verpressen erfolgt aktuell bevorzugt in kontinuierlich arbeitenden Doppelbandpressen oder, seltener, in Kurztaktpressen, die diskontinuierlich arbeiten. Insbesondere wenn der Schichtstoff zahlreiche Lagen umfasst, verlängert sich die Zeit, bis das Kunstharz trotz erhöhtem Druck und erhöhter Temperatur ausgehärtet ist, weil die zahlreichen Lagen sich nur langsam bis auf die zum Aushärten erforderliche Temperatur erwärmen. Soll ein Schichtstoff mit Poren auf den Außenseiten hergestellt werden, so ist dies sehr zeitaufwändig und damit teuer.

Es besteht daher Bedarf an einem flexiblen Verfahren zum Herstellen von Schichtstoffen. Diese Aufgabe wird gelöst mit einem Schichtstoff nach Anspruch 1.

Das Verfahren zur Herstellung eines mehrlagigen Schichtstoffs sieht vor, dass ein Schichtstoff aus mehreren Lagen gefügt wird, wobei jede Lage des Schichtstoffs eine mit Kunstharz imprägnierte Papierbahn aufweist, und wobei der Schichtstoff durch Verpressen der Lagen in einer Presse erzeugt wird. Es wird ein Kern aus mindestens zwei Lagen in einer ersten Presse erzeugt, und eine oder mehrere äußere Lagen werden in einer zweiten Presse mit einer oder beiden Außenseiten des Kerns verpresst.

Nach der Idee der Erfinder wird die Herstellung des Schichtstoffs durch das erfindungemäße Verfahren in zwei Abschnitte entkoppelt, so dass zunächst ein Kern hergestellt wird, der anschließend in einem zweiten Schritt mit äußeren Lagen versehen zu einem Schichtstoff verpresst wird. Das Entkoppeln eines bisher für gleich aufgebaute Kernlagen und äußere Lagen einstufig durchgeführten Verfahrens führt zu einer flexibleren Produktion mit sehr verbesserten Möglichkeiten, besonders starke Schichtstoffe herzustellen.

Der Kern weist zwei oder mehr Lagen auf; eine oder die äußeren Lagen weisen ebenfalls mindestens eine Lage auf. Eine Lage ist jeweils eine mit Kunstharz versehene Papierbahn. Das Papier, häufig als Rohpapier bezeichnet, aus dem die Papierbahn hergestellt ist, kann ein Flächengewicht von 20 g/m² bis 300 g/m² aufweisen. Das Papier, insbesondere für den Kern, ist häufig ein Kraftpapier, das eine gute Saugfähigkeit aufweist. Der Kern weist bevorzugt zahlreiche Lagen auf. Insbesondere, wenn der Kern in einer kontinuierlichen Presse, z. B. einer Doppelbandpresse hergestellt wird, weist er nach dem Pressen in der ersten Presse typisch eine Dicke von 0,1 mm bis 1,2 mm auf. Besonders bevorzugt weist ein Kern eine Dicke von 0,15 mm bis 0,50 mm auf. Der Kern kann aber auch eine größere Dicke aufweisen, wenn es möglich ist, zahlreiche Lagen zu einem Kern zu verpressen, z. B. in einer diskontinuierlichen Presse wie z.B. einer Mehretagenpresse.

Als äußere Lage wird mindestens eine mit Kunstharz imprägnierte Papierbahn auf eine erste Außenseite des Kerns aufgebracht. Bevorzugt wird auf beide Außenseiten jeweils eine äußere Lage aufgebracht. Durch äußere Lagen, die jeweils auf die erste und eine zweite Außenseite des Kerns aufgebracht werden, wirken gleiche Kräfte auf den Kern bzw. auf die erste und die zweite Außenseite des Kerns ein, die sich weitgehend aufheben, so dass Verformungen des Kerns nach der Herstellung vermieden werden. Erfindungsgemäß werden zwei oder mehr äußere Lagen auf die erste Außenseite des Kerns aufgebracht. Auch auf die zweite Außenseite des Kerns können zwei oder mehr äußere Lagen aufgebracht werden. Erfindungsgemäß wird jedoch ein dickeres Papier eingesetzt, wenn auf der ersten Außenseite des Kerns zwei oder mehr äußere Lagen aufgebracht werden.

Bei der äußeren Lage, die auf die erste Außenseite des Kerns aufgebracht wird, wird meist ein Dekorpapier eingesetzt, dessen äußere Seite, die vom Kern abgewandt ist, mit einem ein- oder mehrfarbigen Dekor versehen ist. Typisch sind Holz-, Stein- oder Phantasiedekore, aber auch einfarbige Dekore aus einer Unifarbe. Häufig wird das Dekorpapier durch ein Overlay geschützt, eine leichte Papierbahn, die mit Kunstharz imprägniert ist, und die als äußerste Lage eingesetzt wird, um das Dekorpapier gegen Verschleiß zu schützen. Ggf. wird ein Underlay eingesetzt, das zwischen Kern und Dekorpapier eingesetzt wird. Die äußere Lage, die auf der zweiten Außenseite des Kerns aufgebracht wird, wird meist als Gegenzug bezeichnet.

Als Kunstharz werden duroplastische, aber auch thermoplastische Harze eingesetzt, z. B. Phenolharz, Melaminharz, Harnstoffharz, modifizierte Harnstoffharze, die mit einem Glykol, einem Alkohol, einem Sulfonamid oder mit einem Lactam als Modifikator ausgestattet sind oder die mit einer Mischung von Modifikatoren modifiziert sind. Als Kunstharz eignen sich auch Dispersionen von Kunststoffen auf Basis von Acryl-, Methacryl-, Polyurethan- und Alkydverbindungen, aber auch veretherte Melaminharze. Auch Polyviolverbindungen, Polyvinylalkohol- (PVA) und Polyvinylacetatverbindungen (PVAc) können als Kunstharz für das erfindungsgemäße Verfahren eingesetzt werden. Die vorgenannten Kunstharze können jeweils einzeln oder -sofern sie kompatibel sindauch in Mischung miteinander eingesetzt werden. Dem Fachmann ist bekannt, welche Kunstharze in Mischung miteinander eingesetzt werden können. Bevorzugt wird das Kunstharz in flüssiger Form, also als Harzflotte, zum Tränken oder Imprägnieren des Papiers eingesetzt. Das Kunstharz kann aber auch in pastöser Form aufgestrichen werden oder in fester Form, z. B. in Flocken eingestreut werden. Auch eine Kombination z. B. von festem und flüssigem oder pastösem Kunstharz kann auf das Papier aufgetragen werden. Das Flächengewicht der imprägnierten Papiere, insbesondere für den Kern, liegt üblicherweise zwischen 40 g/m² und 500 g/m². Häufig werden imprägnierte Papiere mit einem Flächengewicht von 80 g/m² bis 300 g/m² eingesetzt. Für den Kern und für die äußeren Lagen können jeweils gleiches oder unterschiedliches Papier und gleiches oder unterschiedliches Kunstharz eingesetzt werden. Die Auswahl von Papier und Kunstharz kann jeweils nach den Anforderungen getroffen werden, die an den herzustellenden Schichtstoff gestellt werden.

Eine Lage für den Kern oder eine äußere Lage wird hergestellt, indem eine Papierbahn mit Kunstharz imprägniert wird, z. B. durch Tauchen in einem Bad flüssigen Kunstharzes oder durch Aufwalzen oder -streichen pastösen Kunstharzes. Ggf. wird der Überschuss abgestreift und das flüssige oder pastöse Kunstharz wird getrocknet. Das Kunstharz ist in diesem Zustand teilweise ausgehärtet, aber noch reaktiv. Die so hergestellte Lage ist trocken; sie ist nicht klebrig. Die Papierbahnen können also aufgerollt oder gestapelt und wieder abgerollt bzw. entstapelt werden.

Der Kern wird in einer ersten Presse hergestellt, bevorzugt als CPL in einer kontinuierlichen Presse, z. B. einer Doppelbandpresse. Hier werden die Lagen des Kerns aufeinander ausgerichtet und zügig miteinander verpresst, z. B. bei Temperaturen von 160 °C bis 200 °C und einem Druck von 20 MPa bei einer Laufgeschwindigkeit von 3 m/min bis 30 m/min. Dem Fachmann ist es bekannt, die Pressbedingungen an die Herstellung des jeweiligen Kerns optimal anzupassen. Alternativ kann der Kern als HPL in einer Kurztakt- oder Mehretagenpresse, also in einer diskontinuierlichen Presse, bei hohen Presstemperaturen von z. B. 180 °C oder mehr und einem Druck von 20 MPa in kurzer Zeit verpresst werden. Während des Pressvorgangs wird das Kunstharz zunächst wieder verflüssigt und härtet dann unter Einwirkung von Druck und Temperatur aus. Die Pressbedingungen der ersten Presse können so eingestellt werden, dass insbesondere Kerne besonders großer Dicke hergestellt werden können, z. B. Kerne einer Dicke von bis zu 40 mm. Typisch werden dabei Kerne mit einer Dicke von bis zu 2 mm, aber auch bis 5 mm Dicke in einer Kurztaktpresse hergestellt. Dickere Kerne mit einer Dicke von bis zu 10mm, aber auch bis zu z. B. 40 mm Dicke werden in der Regel in einer Mehretagenpresse hergestellt.

Bei einem einstufigen Verfahren nach dem Stand der Technik härtet das Kunstharz in der Regel vollständig aus; es ist nach Verlassen der Presse nicht mehr reaktiv. Ein solches vollständiges Aushärten kann auch für den hergestellten Kern erreicht werden. Die Pressbedingungen für das Verfahren werden aber bevorzugt so gewählt, dass das Kunstharz auch nach dem Pressen noch nicht vollständig ausgehärtet ist, so dass das Verpressen mit den äußeren Lagen noch wirksam über eine Reaktion des Kunstharzes erfolgen kann. Nach einer weiteren Alternative sind die Außenlagen des Kerns oder die äußere Lage, die auf den Kern aufgebracht wird, nicht mit Kunstharz gesättigt, so dass das Kunstharz der äußeren Lage oder des Kerns auch mechanische Verankerung an der Papierbahn findet und/oder mit den Fasern der Papierbahn chemisch bindet.

In einem zweiten Schritt wird mindestens eine äußere Lage auf den Kern gelegt und in einer zweiten Presse mit dem Kern verpresst. Die zweite Presse kann vom selben Typ sein wie die erste Presse. Es kann sich auch um dieselbe Presse handeln, sofern der Kern zuerst produziert wird und erst danach in einem zweiten Arbeitsgang die äußeren Lagen aufgebracht werden. Nach einer bevorzugten Ausführungsform wird der Kern -nachdem er ggf. zu für die Presse passenden Bögen geschnitten wurde- in einer Kurztaktpresse mit mindestens einer äußeren Lage zu einem Pressgutstapel geschichtet und dann zu einem Schichtstoff verpresst. Dabei können die Lagen des Kerns mit einem ersten Kunstharz imprägniert sein, das unterschiedlich ist von dem zweiten Kunstharz der äußeren Lagen. Der Kern und die äußeren Lagen können aber auch dasselbe Kunstharz aufweisen. Dem Fachmann ist bekannt, welche Kunstharze miteinander verpresst werden können und welche Kunstharze nicht miteinander verpresst werden können.

Als erste oder zweite Presse sind kontinuierliche und diskontinuierliche Pressen geeignet, wobei eine kontinuierliche Presse bevorzugt als erste Presse geeignet ist, während eine diskontinuierliche Presse besonders als zweite Presse geeignet ist. Als erste Presse wird insbesondere eine Doppelbandpresse eingesetzt, eine Kurztakt- oder Einetagenpresse wird vorteilhaft als zweite Presse eingesetzt.

Es ist möglich, zunächst einen Kern herzustellen, vorzugsweise in einer kontinuierlichen Presse, um dann anschließend, bevorzugt in einer diskontinuierlichen Presse, kleine Serien äußerer Lagen mit jeweils verschiedenen Dekoren auftragsbezogen fertigen zu können. Alternativ können auf einen Kern eine verschiedene Anzahl äußerer Lagen aufgebracht werden. Der Kern kann unabhängig von der Endfertigung in großer Menge gefertigt werden. Auf der anderen Seite können mittels Einsatz der zweiten Presse kleinste Losgrößen wirtschaftlich gefertigt werden. Insbesondere wenn die zweite Presse eine diskontinuierliche Presse ist, können besonders groß- und besonders kleinformatige Platten hergestellt werden. Dies reduziert den Verschnitt, weil bereits die Plattengröße der zweiten Pressen auf das Endprodukt abgestimmt werden kann.

Die äußeren Lagen werden auf den Kern zu einem Schichtstoff gepresst. Dabei liegt nach einer vorteilhaften Ausführung ein wesentlicher Vorteil darin, dass der Kern vor dem Aufbringen der äußeren Lagen nicht geschliffen werden muss. Der vorgefertigte Kern kann vorzugsweise unmittelbar ohne weitere Oberflächenbehandlung weiterverarbeitet werden.

Die Pressbleche, die an den äußeren Lagen des Schichtstoffs anliegen, können ohne Struktur, d. h., mit ebener Außenfläche gestaltet sein. Bevorzugt wird die Außenfläche der äußeren Lage jedoch während des Pressvorgangs mit einer Struktur versehen, d. h., die Außenfläche wird dreidimensional gestaltet. Häufig wird ein strukturiertes Pressblech vorgesehen, das die Außenfläche der äußeren Lage prägt. Es kann aber z. B. auch eine strukturierte Folie eingesetzt werden, die auf die äußere Lage aufgelegt wird, und die nach dem Verpressen abgezogen wird. Der mit strukturierten Pressblechen erzeugte Schichtstoff weist eine Oberfläche auf, die mit einer dreidimensionalen Struktur versehen ist. Häufig und bevorzugt ist die dreidimensionale Struktur an ein zweidimensionales, durch Farbe erzeugtes Dekor abgestimmt, wobei das Dekor auf dem Papier einer äußeren Lage des Schichtstoffs aufgebracht ist. Diese abgestimmte Herstellung von Dekor mit passender Struktur wird auch als Synchronpore bezeichnet. Die Synchronpore wird in technischem Maßstab nur in einer diskontinuierlichen Presse hergestellt. Solche Oberflächen sind für Schichtstoffe sehr gefragt, können zurzeit mit einstufigen Verfahren aber nur sehr aufwändig mit außerordentlich langen Presszeiten in diskontinuierlichen Pressen hergestellt werden. Es ist als besonderer Vorteil des Verfahrens anzusehen, dass Schichtstoffe mit Synchronpore nun flexibel und schneller hergestellt werden können, weil die Verweildauer zum Aufbringen der äußeren Lagen wesentlich geringer ist als die Verweildauer, die zum einstufigen Herstellen des gesamten Schichtstoffs in der diskontinuierlichen Presse erforderlich ist. Das zweistufige Verfahren bringt also insbesondere bei der Herstellung hochwertiger Schichtstoffe mit strukturierter Oberfläche, insbesondere mit einer Synchronpore, Vorteile hinsichtlich Zeitersparnis, Kosten und der Möglichkeit, in flexibler Weise Klein- und Kleinstserien herstellen zu können.

Das Aufpressen der äußeren Lagen, vorzugsweise in einem diskontinuierlichen Pressvorgang, führt dazu, dass kein Ausschuss beim Anfahren oder Auslaufen einer Produktion mit einem bestimmten Dekor anfällt. Jede im zweiten Schritt diskontinuierlich hergestellte Schichtstoffplatte ist sofort verwendbar und es wird nur die gewünschte Anzahl von Platten hergestellt. Diese Vorteile sind mit dem bekannten, einstufigen Verfahren nicht zu erreichen.

Bei dem einstufigen Verfahren nach dem Stand der Technik können entweder nur große Serien in einer kontinuierlichen Presse hergestellt werden oder es werden von vornherein plattenförmige Schichtstoffe in diskontinuierlichen Pressen hergestellt. Dann dauert der Pressvorgang jedoch übermäßig lang, weil das Kunstharz der zu verbindenden Lagen ein schlechter Wärmeleiter ist und es lange dauert, bis die mittleren Lagen des Kerns ausgehärtet sind. Um Schäden an den äußeren Lagen zu vermeiden, die an den Pressblechen anliegen, muss zudem die Presstemperatur reduziert werden. Diese Maßnahme verlängert die Pressdauer zusätzlich. Damit wird die Herstellung von Schichtstoffen in einer diskontinuierlichen Presse unwirtschaftlich.

Bei dem zweistufigen Verfahren dagegen kann der Kern ohne die äußeren Lagen wesentlich schneller und in großer Menge vorgefertigt werden. Der Kern wird so gewählt, dass er für die meisten Schichtstoffe verwendbar ist. Es sind ganz überwiegend die äußeren Lagen, die erforderlich sind, um den Schichtstoff an die verschiedenen Verwendungen anzupassen, z. B. hinsichtlich des Dekors oder hinsichtlich der technischen Eigenschaften. Da jedoch oft nur kleine oder kleinste Losgrößen eines bestimmten Schichtstoffs benötigt werden, kann nach dem zweistufigen Verfahren flexibel gefertigt werden, ohne dass ein großes Lager an Schichtstoffen vorzuhalten ist.

Nach den vorstehenden Erläuterungen wird deutlich, dass auch unterschiedlich ausgerüstete äußere Lagen auf den Kern aufgebracht werden können. Der erfindungsgemäße Schichtstoff kann insbesondere durch Gestaltung der äußeren Lagen aber ggf. auch des Kerns an spezifische chemische oder mechanische, aber auch ästhetische Anforderungen, z. B. an Anforderungen hinsichtlich der Leitfähigkeit, der Brand- bzw. Feuerbeständigkeit und anderen Anforderungen wie z. B. einer verbesserten Haptik angepasst werden. So kann eine äußere Lage z. B. eine der nachfolgend genannten Ausrüstungen oder mehrere dieser Ausrüstungen in Kombination aufweisen: einen partikelförmigen Hartstoff, insbesondere Korund, einen brandhemmenden Zusatz wie z. B. eine Borverbindung, einen fungiziden oder bakteriziden Zusatz, einen leitfähigen Zusatz wie z. B. Metallpartikel, Ruß, Graphit oder Nanotubes. Die Haptik des Schichtstoffs kann eingestellt werden durch Zugabe von partikelförmigen Feststoffen wie z. B. feinkörnigem Sand, Korkpartikeln, oder auch feinen Faserpartikeln. Diese Ausrüstungen können entweder in das Papier eingebracht sein, oder sie können im Kunstharz gelöst oder dispergiert sein oder sie können zwischen einzelnen Lagen eingestreut sein und dann beim Verpressen in den Schichtstoff integriert werden. So können z. B. unter Zusatz von partikelförmigen Hartstoffen Schichtstoffe hergestellt werden, die die Herstellung von Fußbodenpaneelen mit einer Abriebbeständigkeit ermöglichen, die eine Klassifizierung in die Nutzungsklasse 31 oder höher erlaubt. In gleicher Weise wie vorstehend beschrieben kann der Kern durch Zugabe von Additiven an verschiedene technische oder ästhetische Anforderungen angepasst werden. Der Kern kann z. B. durch Zusatz brandhemmender Zusätze oder leitfähiger Zusätze eine verbesserte Brandbeständigkeit bzw. Leitfähigkeit aufweisen.

Nach einer besonders vorteilhaften Ausführung der Erfindung können weiter zur Herstellung besonders starker Schichtstoffe mehrere Kerne miteinander zu einem Gesamtkern verklebt oder verleimt werden. Auf diesen Gesamtkern kann dann mindestens eine äußere Lage gepresst werden. Vorteilhaft ist hier, dass nur ein Kern mit einer Dicke herzustellen ist, und dass Gesamtkerne, deren Dicke ein Mehrfaches des einfachen Kerns beträgt, durch Verkleben bzw. Verleimen von mindestens zwei Kernen hergestellt werden können. Kaschieranlagen zum vollflächigen Verkleben oder Verleimen sind bekannt. Dies ist ein Beitrag zu einem weiter flexibilisierten Verfahren. Mit diesem Verfahren können Schichtstoffe mit besonders großer Dicke hergestellt werden, z. B. bis zu 50 mm Dicke. Solche Schichtstoffe werden als Vollkernplatten bezeichnet und finden Verwendung z. B. im Innen- und Außenbau.

Das vorstehend beschriebene Verfahren in allen seinen Ausführungen und Varianten bietet den Vorteil, dass es ohne weiteres in vorhandene Betriebsabläufe integriert werden kann, wobei insbesondere die Möglichkeit zur Herstellung von Klein- und Kleinstserien sowie Platten mit Sondermaßen, z. B. mit besonders großen oder kleinen Abmessungen außerordentlich verbessert ist, bei gleichzeitiger Reduzierung von Verschnitt bzw. Ausschuss.

Der erfindungsgemäße Schichtstoff kann für sich genommen verwendet werden, insbesondere wenn ein Schichtstoff mit einer Dicke von mehr als 3 mm, vorteilhaft von mehr als 10 mm, besonders vorteilhaft von mehr als 30 mm hergestellt wurde. Eine bevorzugte Verwendung des Schichtstoffs ist die Verwendung als Paneel, im Außenbereich z. B. zur Fassadengestaltung, im Innenbereich zur Wand-, Boden- oder Deckengestaltung und auch für die Herstellung von Möbeln. Der erfindungsgemäße Schichtstoff kann aber auch auf ein Substrat aufgebracht werden, beispielsweise auf eine Holzwerkstoffplatte, auf ein Substrat aus Kunststoff, mineralischem Werkstoff oder Glas, aber auch auf ein Substrat aus Metall. Bevorzugt ist das Substrat eben, so dass der Schichtstoff aufgeklebt oder -geleimt oder auf das Substrat laminiert werden kann. Bevorzugt werden Schichtstoffe von bis zu 5 mm auf ein Substrat aufgebracht. Mit einer Schichtstoff-Oberfläche versehene Substrate können überall dort eingesetzt werden, wo hoch belastbare Oberflächen gefragt sind, z. B. als Bodenbelag, für Arbeitsflächen, aber auch dort wo dekorative Oberflächen gefragt sind, also bei der Innenraumgestaltung von Böden, Wänden und Decken sowie bei der Möbelherstellung.

Die Erfindung umfasst auch einen Schichtstoff, der aus einem Kern besteht, der zum Aufbringen äußerer Lagen bestimmt ist. Ein solcher Kern weist häufig keine Lage auf, die Dekorpapier umfasst. Ein solcher Kern weist häufig keine Ausrüstung mit partikelförmigen Hartstoffen auf und/oder eine Ausrüstung, die brandhemmend, fungizid, bakterizid und/oder leitfähig ist. Der erfindungsgemäße Kern weist häufig ein nicht vollständig ausgehärtetes Kunstharz auf. Alternativ oder ergänzend zu den vorgenannten Eigenschaften weist der Kern häufig eine oder zwei Außenlagen auf, die nicht vollständig mit Kunstharz imprägniert sind. Damit bietet der Kern auch bei vollständig ausgehärtetem Kunstharz gute Möglichkeiten zur Anbindung von äußeren Lagen, z. B. durch mechanische Verankerung an den Papierfasern, die nicht vollständig mit Kunstharz abgedeckt sind.

Die Anbindung der äußeren Lagen an diesen Kern wird insbesondere durch das Einwirken von erhöhten Temperaturen, z. B. von Temperaturen zwischen 80 °C und 180 °C, bevorzugt von Temperaturen zwischen 120 °C und 160 °C verbessert. Das bereits ausgehärtete oder weitgehend ausgehärtete Kunstharz des Kerns ist dann für ein Anbinden des Kunstharzes der äußeren Lagen besonders aufnahmebereit. Das Anbinden der äußeren Lage kann zusätzlich durch erhöhten Druck, z. B. in einer Kurztaktpresse, unterstützt werden.

Die im Zusammenhang mit dieser Erfindung beschriebenen alternativen Ausführungsformen können einzeln oder in Gruppen miteinander kombiniert werden.

Details der Erfindung werden an Ausführungsbeispielen näher erläutert. Es zeigen:
- Fig. 1: einen erfindungsgemäßen Schichtstoff nach einer ersten Ausführung
- Fig. 2: einen erfindungsgemäßen Schichtstoff nach einer zweiten Ausführung

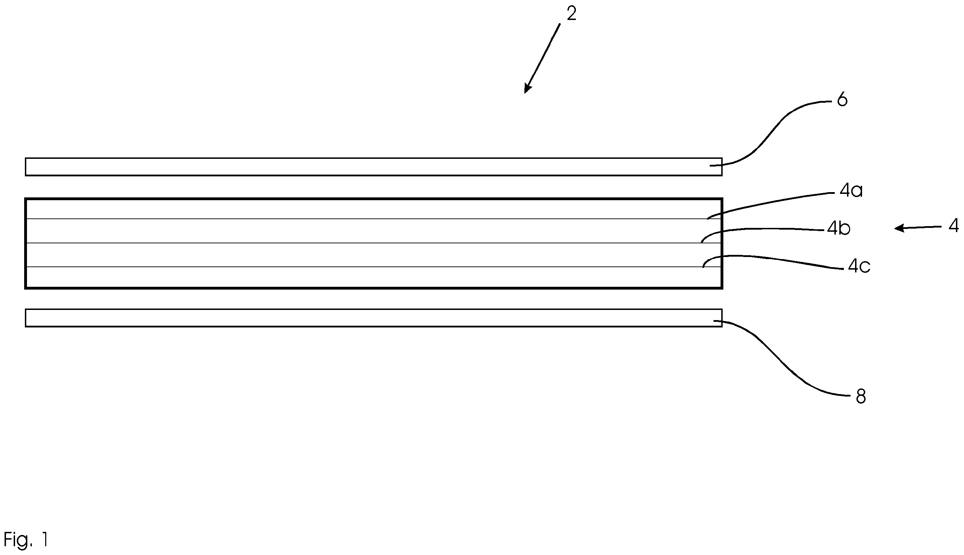

Fig. 1 zeigt als nicht-erfindungsgemäße Ausführung einen erfindungsgemäßen Schichtstoff 2 zusammengesetzt aus einem mehrlagigen Kern 4, einer ersten äußeren Lage 6 und einer zweiten äußeren Lage 8.

Der Kern 4 weist drei Lagen 4a-4c aus einem Kraftpapier mit einem Blattgewicht von 120 g/m² auf, das mit flüssigem Phenolharz getränkt und getrocknet wurde. Die Restfeuchte beträgt ca. 5 %. Die getrocknete Lage weist ein Blattgewicht von 250g/m² auf und enthält ein noch reaktives Phenolharz. Die drei Lagen 4a-4c werden übereinander gelegt und in einer kontinuierlichen Presse, z. B. einer Doppelbandpresse, zu einem Kern 4 gefügt. Die Presstemperatur beträgt 180 °C, der Pressdruck beträgt 20 MPa und die Geschwindigkeit der Presse beträgt ca. 15 m/min bei einer Länge der Doppelbandpresse von 7 m.

Der so hergestellte Kern, ein CPL, kann entweder als endlose Bahn aufgerollt werden oder der Kern kann unmittelbar im Anschluss an das Verlassen der kontinuierlichen Presse zerteilt werden in Bögen, die bevorzugt an die Abmessungen einer diskontinuierlichen Presse angepasst sind.

Der Kern 4 wird dann zu einem Pressgutstapel aufgebaut, dessen unterster Bestandteil die zweite äußere Lage 8 ist. Diese zweite äußere Lage 8 ist ein Dekorpapier aufweisend ein Papier mit einem Blattgewicht von 80 g/m², das nach dem Imprägnieren mit flüssigem Melaminharz und dem Trocknen auf eine Restfeuchte von 5 % ein Blattgewicht von 140 g/m² aufweist. Das Dekorpapier ist einseitig mit einem Farbdekor, z. B. einem Holzdekor, einem Steindekor, einem Phantasiedekor oder auch einem geometrischen Muster, alternativ mit einem einfarbigen Farbauftrag versehen. Diese mit einem Farbdekor versehene äußere Seite der zweiten äußeren Lage 8 weist nach außen, also vom Kern 4 weg.

Auf die zweite äußere Lage 8 wird der Kern 4 gelegt, darauf die erste äußere Lage 6, die in gleicher Weise aufgebaut und angeordnet ist wie die Lage 8. Für den Fachmann liegt auf der Hand, dass alternativ die erste und die zweite Lage auch unterschiedliches Papier mit einem verschiedenen Kunstharz und unterschiedliche Kunstharzanteile aufweisen können. Außerdem können die Dekore für jede äußere Lage frei gewählt werden. Insbesondere für die zweite äußere Lage kann auch ein Papier ohne Dekor gewählt werden.

Der Pressgutstapel wird mittels Transportbänder in eine Kurztaktpresse überführt und dort beispielsweise bei 300 N/cm² für 18 Sekunden verpresst. Die Zeit bis zum Aufbau des maximalen Pressdrucks beträgt 1,5 Sekunden. Nach 18 Sekunden wird die Presse geöffnet und die Schichtstoffplatte 2 wird aus der Presse herausgefahren und kühlt ab. Die Pressbleche, die jeweils an der ersten und der zweiten äußeren Lage anliegen, können in einer einfachen Ausführung Pressbleche mit einer ebenen Oberfläche sein. Vorliegend werden jedoch Pressbleche verwendet, denen eine dreidimensionale Struktur eingeprägt wurde. Die Struktur des Pressblechs kann nach einer vorteilhaften Ausführung auf das Dekor der äußeren Lage abgestimmt sein.

Nach dem Abkühlen des Schichtstoffs liegt ein 0,7 mm starker Schichtstoff mit einer Dichte von 1350 kg/m³ vor.

Der Schichtstoff kann so wie er ist mit beidseitig dekorierten Oberflächen verwendet werden, z. B. als Trennwand mit zwei sichtbaren Oberflächen. Der Schichtstoff kann aber auch unter Verzicht auf eine sichtbare Oberfläche auf ein Substrat geklebt oder geleimt werden, z. B. auf eine Holzwerkstoffplatte oder eine Mineralfaserplatte.

Soll der Schichtstoff 2 auf ein Substrat aufgeklebt oder aufgeleimt werden, ist es jedoch bevorzugt, die zweite äußere Lage 8 ohne Dekor auszubilden. Wird die Oberfläche des Schichtstoffs 2, die durch die erste äußere Lage 6 gebildet wird, mechanisch stark beansprucht, dann wird nach einer vorteilhaften Ausführung eine weitere äußere Lage auf die erste äußere Lage 6 aufgebracht, um das Dekor gegen Verschleiß und mechanische Beanspruchung zu schützen. Zum Schutz gegen mechanische Belastung wird häufig auch ein partikelförmiger Hartstoff, bevorzugt Korund in eine äußere Lage eingebracht.

Für weitere alternative Ausführungsbeispiele werden für gleiche Gegenstände dieselben Bezugszeichen verwendet.

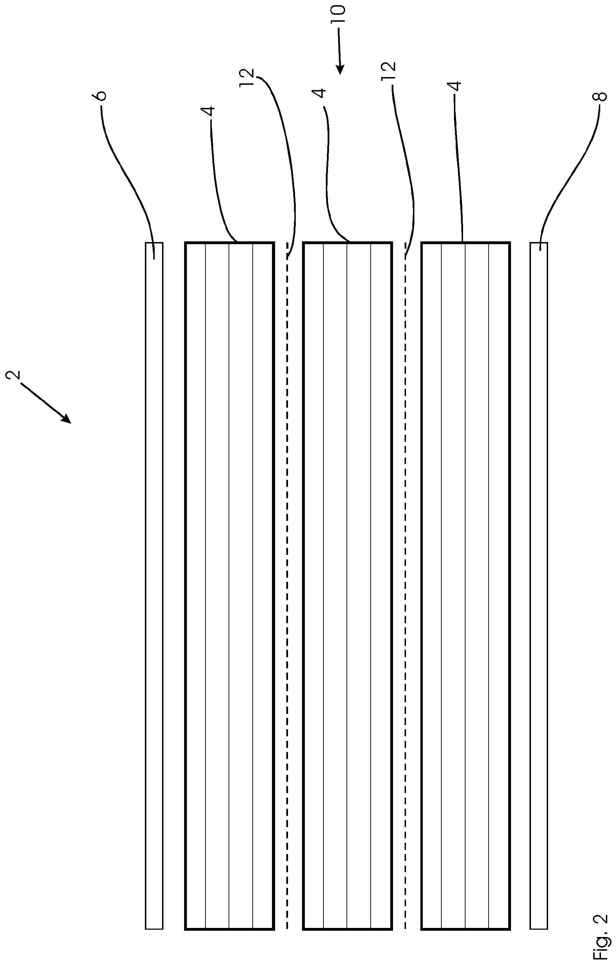

Fig. 2 zeigt eine nicht-erfindungsgemäße, alternative Ausführung eines erfindungsgemäßen Schichtstoffs 2. Der Gesamtkern 10 ist aus drei Kernen 4 zusammengesetzt. Jeder Kern 4 ist hergestellt so wie im Zusammenhang mit Fig. 1 beschrieben. Die einzelnen Kerne 4 sind mit einer Schicht 12 aus Polyurethan-Klebstoff (PU-Klebstoff) zu einem Gesamtkern 10 verbunden. Der Gesamtkern 10 wird als zentraler Bestandteil zwischen einer zweiten äußeren Lage 8 auf der Unterseite und einer ersten äußeren Lage 6 auf der Oberseite zu einem Pressgutstapel geschichtet. Dieser Pressgutstapel wird wie vorstehend im Zusammenhang mit Fig. 1 beschrieben, in einer Kurztaktpresse verpresst.

Es entsteht ein Schichtstoff von 1,7 mm Dicke und einer Dichte von 1350 kg/m³.

## Patentansprüche

1. Schichtstoffplatte, aufweisend einen Kern (4) aus mindestens einer Lage eines kunstharzimprägnierten Papiers und zwei Außenseiten, **dadurch gekennzeichnet, dass** auf eine erste Außenseite als äußere Lage (8) zwei oder mehr kunstharzgetränkte Papiere aufgebracht sind, und dass auf eine zweite Außenseite ein dickeres kunstharzgetränktes Papier aufgebracht ist.

2. Schichtstoffplatte nach Anspruch 1, **dadurch gekennzeichnet, dass** der Kern (4) eine Dicke von 0,1 bis 1,2 mm aufweist.

3. Schichtstoffplatte nach Anspruch 1 oder 2, **dadurch gekennzeichnet, dass** die Schichtstoffplatte mehrere miteinander verklebte Kerne (4) aufweist.

4. Schichtstoffplatte nach mindestens einem der Ansprüche 1 bis 3, **dadurch gekennzeichnet, dass** die äußeren Lagen (8) eine strukturierte Oberfläche aufweisen.

5. Schichtstoffplatte nach Anspruch 4, **dadurch gekennzeichnet, dass** die strukturierte Oberfläche der äußeren Lagen (8) synchron auf ein Dekor einer äußeren Lage (8) abgestimmt ist.

6. Schichtstoffplatte nach mindestens einem der Ansprüche 1 bis 5, **dadurch gekennzeichnet, dass** mindestens eine äußere Lage (8) einen partikelförmigen Hartstoff, einen brandhemmenden Zusatz, einen fungiziden Zusatz, einen bakteriziden Zusatz, einen leitfähigen Zusatz und/oder einen partikelförmigen Feststoff zur Einstellung der Haptik aufweist.

## Claims

1. A laminated material, having a core (4) consisting of at least one layer of a sheet of paper impregnated with synthetic resin and two outer sides, **characterized in that** two or more sheets of paper impregnated with synthetic resin are applied as an outer layer (8) to a first outer side, and **in that** a thicker sheet of paper impregnated with synthetic resin is applied to a second outer side.

2. The laminated material according to claim 1, **characterized in that** the core (4) has a thickness of 0.1 to 1.2 mm.

3. The laminated material according to claim 1 or 2, **characterized in that** the laminated material has a plurality of cores (4) that are glued together.

4. The laminated material according to at least one of claims 1 to 3, **characterized in that** the outer layers (8) have a structured surface.

5. The laminated material according to claim 4, **characterized in that** the structured surface of the outer layers (8) is synchronized with a decoration of an outer layer (8).

6. The laminated material according to at least one of claims 1 to 5, **characterized in that** at least one outer layer (8) has a particulate hard substance, a fire-retardant additive, a fungicidal additive, a bactericidal additive, a conductive additive and/or a particulate solid substance for adjusting the surface feel.

## Revendications

1. Stratifié présentant un noyau (4) constitué d'au moins une couche d'un papier imprégné de résine synthétique et deux faces extérieures, **caractérisé en ce que** deux ou plusieurs papiers imbibés de résine synthétique sont appliqués sur une première face extérieure en tant que couche extérieure (8), et **en ce qu'**un papier imbibé de résine synthétique plus épais est appliqué sur une deuxième face extérieure.

2. Stratifié selon la revendication 1, **caractérisé en ce que** le noyau (4) présente une épaisseur comprise entre 0,1 et 1,2 mm.

3. Stratifié selon la revendication 1 ou 2, **caractérisé en ce que** le stratifié présente plusieurs noyaux (4) collés ensemble.

4. Stratifié selon l'une au moins des revendications 1 à 3, **caractérisé en ce que** les couches extérieures (8) présentent une surface supérieure structurée.

5. Stratifié selon la revendication 4, **caractérisé en ce que** la surface supérieure structurée des couches extérieures (8) est adaptée de façon synchronisée à une décoration d'une couche extérieure (8).

6. Stratifié selon l'une au moins des revendications 1 à 5, **caractérisé en ce qu'**au moins une couche extérieure (8) présente un matériau dur sous forme de particules, un additif ignifuge, un additif fongicide, un additif bactéricide, un additif conducteur et/ou un matériau solide sous forme de particules pour le réglage de la partie haptique.
